# EUROPEAN PATENT APPLICATION

(11) **EP 3 082 132 A1**
(43) Date of publication of application: **19.10.2016**
(21) Application number: 14869046.4
(22) Date of filing: 08.12.2014
(51) Int. Cl.: G21C 11/06, G21C 15/10

(54) **FAST NEUTRON REACTOR AND NEUTRON REFLECTOR BLOCK OF A FAST NEUTRON REACTOR**

(30) Priority: 10.12.2013 RU 2013154529
(71) Applicant: Joint Stock Company "Akme-Engineering", Moscow 115035 (RU)
(72) Inventor: BULAVKIN, Sergey Viktorovich, Moscow 127410 (RU)
(74) Representative: Mitev, Mitko Karushkov
(86) International application number: PCT/RU2014/000916
(87) International publication number: WO 2015/088390

(57) **Abstract**

The invention relates to the field of nuclear engineering, and more particularly to designs for removable neutron reflector blocks for heavy liquid metal-cooled fast neutron reactors. The present fast neutron reactor contains a core consisting of heavy liquid metal-cooled fuel rods, and neutron reflector blocks, disposed around the core, which comprise a steel casing with at least one inlet opening in the side walls thereof above the core boundary, said inlet opening being intended for diverting part of the coolant flow from the space between the blocks into the casing, and at least one vertical pipe mounted in the casing, through which the diverted coolant flow, which has passed through the upper and lower boundaries of the core, enters the bottom part of the casing; also, on the outer side of the casing, above the inlet opening, there is mounted a throttling device for creating hydraulic resistance to the coolant flow in the space between the blocks. The technical result is an increase in the operating safety and the performance of a fast neutron reactor and a reduction in the heat exchange surface of the steam generator.

## Description

### Field of the Invention

The invention relates to the field of nuclear engineering, and more particularly to heavy liquid metal-cooled fast neutron reactors containing removable neutron reflector blocks.

### Prior Art

The prior art discloses heavy liquid metal-cooled fast neutron reactors containing reflector blocks [see http://www.atomic-energy.ru/technology/36000], [Patent RU 2408094 published on 12/27/2012].

The following requirements are imposed on reflector blocks of heavy liquid metal-cooled fast neutron reactors: protection of non-removable and non-reloadable shells of the reactor plant located outside of the reflector from neutron and gamma radiation; minimizing the coolant flow through reflector blocks, as the volumetric energy release in steel structures of the reflector is less than that in fuel rods by 2-3 times or more, and the coolant flow for the reflector block cooling chills down the coolant coming from the fuel rod part of the core by mixing with it; minimizing the content of structural materials in the reflector blocks cross section to reduce parasitic neutron capture.

Currently, nuclear power plants (NPP) with operating sodium-cooled fast neutron reactors use the design wherein the reflector blocks consist of three parts: head section, middle part, and a shank. Such reflector blocks are mounted to the reactor header supplying coolant for block cooling with the shank. Sodium coolant in the blocks is throttled using washers installed into the core space of the blocks, and sodium-washing coolant in the space between the blocks is throttled outside the shank via barb connection, and at the top of the casing using washers. All of the above throttling structures in the sodium coolant are rather compact since the local sodium rate may be increased up to 8÷10 m/s, and throttling flow paths may be designed with a small cross-sectional area for the coolant.

### Implementation of the Invention

The task to be solved by the group of inventions is to design a fast neutron reactor reflector block improving the thermohydraulics of the heavy liquid metal-cooled reactor plant by providing for the upper and lower limits for the heavy liquid metal coolant in terms a structure washing rate.

The technical result of the claimed group of inventions is an increase in the operating safety of a fast neutron reactor based on the reduced temperature of fuel claddings reached by means of the coolant temperature equalization along the core radius; an increase in the performance of a fast neutron reactor based on the increased coolant medium mixing temperature at the core outlet, i. e. the temperature of the coolant to have passed the fuel rod part of the core, and the temperature of the coolant to have passed the reflector block, reached by increasing the temperature of the coolant to have passed through the reflector block.

The claimed technical result is achieved as a fast neutron reactor contains a core consisting of heavy liquid metal-cooled fuel rods, and neutron reflector blocks disposed around the core, which comprise a casing with at least one inlet opening in the side walls thereof, the said inlet opening being intended for diverting part of the coolant flow from the space between the blocks into the casing, at least one vertical pipe mounted in the casing, through which the diverted coolant flow, passing through the upper and lower boundaries of the core, enters the bottom part of the casing, and on the outer side of the casing, above the inlet opening, and a throttling device is mounted for creating hydraulic resistance to the coolant flow in the space between the blocks.

The claimed technical result is achieved as a neutron reflector block of a fast neutron reactor comprises a casing with at least one inlet opening in the side walls thereof, the said inlet opening being intended for diverting part of the coolant flow from the space between the blocks into the casing, at least one vertical pipe mounted in the casing, through which the diverted coolant flow enters the bottom part of the casing, and a throttling device mounted on the outer side of the casing, above the inlet opening, for creating hydraulic resistance to the coolant flow in the space between the blocks.

The coolant passes between the reflector blocks and then through 30 openings in the casing walls and through the vertical pipes, and flows between the lower (core inlet) and upper (core outlet) boundaries of the core three times; thus, the coolant is heated three times more due to absorption of radiation in the coolant itself, and due to consistent heating along the coolant flow path in the cooling process of reflector block steel structures releasing energy associated with ionizing radiation absorption. Therefore, instead of using throttling devices with a high local coolant flow rate, the coolant flow is redirected to a longer flow path, where a higher hydraulic resistance is achieved both by the coolant flow path turns inside the reflector block casing and by friction losses along the longer flow path. At the same time, the reflector block hydraulic resistance increases, and the reflector blocks and fuel rods run in parallel in the hydraulic reactor plant primary circuit, i. e. the general hydraulic differences in the core respond to the same. Hence, a greater coolant flow rate will be directed to the fuel rod part of the core. This ensures equalization of the increasing coolant temperature along the core radius.

Temperature equalization of the coolant flowing through the core and the reflector blocks allows to reduce the maximum temperature of fuel cladding (hot-spot temperature) by increasing the coolant flow entering the fuel rods of the core. This is one of the main limiting factors in determination of the performance criteria for fuel claddings in the heavy liquid metal-cooled fast neutron reactor.

Furthermore, in a specific embodiment of the invention, vertical pipes are connected to the casing above the upper core boundary.

Furthermore, in a specific embodiment of the invention, the neutron reflector block casing is made of martensite-ferrite structural steel.

Furthermore, in a specific embodiment of the invention, the neutron reflector block further comprises a shank.

### Disclosing Information

Fig. 1 - layout of the reactor core elements for triangular arrangement of fuel rods;

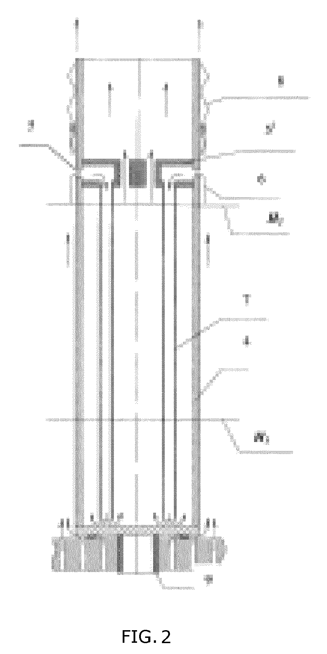

Fig. 2 - reflector block (longitudinal section);

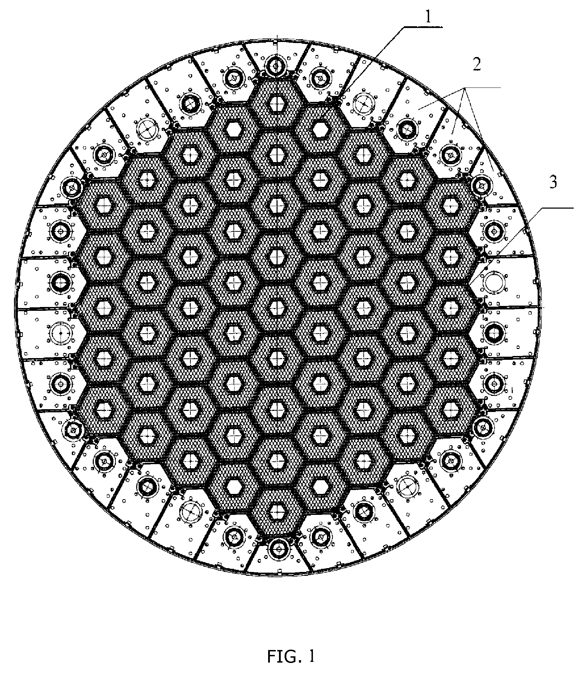

The fast neutron reactor with the elements layout shown in Figure 1 comprises a core **(1)** consisting of fuel rods **(2),** with a heavy liquid metal coolant, primarily lead or an eutectic of lead and bismuth. The core **(1)** has a lower boundary **H₁** (core inlet) and an upper boundary **H₂** (core outlet). The neutron reflector blocks **(3)** are disposed around the core **(1).** They are designed to reduce neutron leakage and return the same to the core **(1).**

The neutron reflector block shown on Figure 3 comprises a steel casing **(4)** with at least one inlet opening **(5)** in the side walls thereof, intended for diverting part of the coolant flow **(6)** from the space between the blocks into the casing and into the return header (**5¹**), at least one vertical pipe **(7),** through which the diverted coolant flow **(6)** enters the bottom part of the casing **(4),** the said pipe being connected thereto through the header (**5¹**) by means of welding. Vertical pipes **(7)** may be installed along the longitudinal axis of the reflector block or may be twisted against its longitudinal axis. A throttling device **(8)** is mounted on the outer side of the casing **(4):** at its top, in the section from inlet opening **(5)** to the reflector block outlet. Its design shall provide for an increase in the coolant flow from the space between the blocks into the casing **(4)** by creating hydraulic resistance substantial for the diverted coolant flow in the vertical section of the space between blocks, wherein the coolant rate in the throttling device **(8)** shall not exceed 2÷2.5 m/s in order to reduce erosion/corrosion on the washed casing **(4)** walls. In a preferred embodiment, the throttling device **(8)** comprises an overlay steel plate with one side welded to the casing **(4)** wall, the said plate being graded or corrugated from the casing wall surface to improve the coolant flow thereunder. The overlay plate is slotted in order to adjust the flow rate of the coolant flowing under the overlay plate by setting the width and length of cuts. The outer side of the overlay plate of one reflector block shall be in contact with or gapped apart from the outer side of the overlay plate of the adjacent reflector block. To increase the performance of the throttling device **(8),** overlay plates shall be placed upon each casing **(4)** wall of the reflector block above the upper core boundary **(H₂)** to cover all gaps between the reflector blocks. The reflector block casing **(4)** wall under the overlay plate of the throttling device **(8)** may be tapered to increase the coolant flow under the plate. The reflector block further includes a shank **(9)** to be mounted to the reactor base. The preferred embodiment may have the reflector block casing **(4)** made of martensite-ferrite structural steel, as this class of steel is resistant to corrosion when used in a heavy liquid metal coolant medium, and maintains good plastic properties under the condition of high neutron irradiation. It is preferred to mount vertical pipes **(7)** in the casing **(4)** above the upper boundary **(H₂)** of the core **(1)** instead of mounting between the lower **(H₁)** and upper **(H₂)** boundaries of the core **(1),** in order to reduce irradiation embrittlement of welded joints at the pipe **(7)** connection points, as higher neutron fluxes pass between **H₁** and **H₂** of the core **(1),** and as the coolant flow path increases with the openings upward offset along the casing of the reflector block. The reflector block casing **(4)** may have a triangular, square, hexagonal or other optional form in the cross section, depending on the arrangement of fuel rods **(2)** used.

### Mode of Operation

Fuel assemblies with fuel rods **(2)** are loaded into the fast neutron reactor core **(1).** The neutron reflector blocks **(3)** are disposed around the core **(1)** so that the inlet openings **(5)** in the side walls of the casing **(4)** are located above the upper boundary **(H₂)** of the core **(1).** Thus, the coolant flow **(6)** part passing through the upper boundary **(H₂)** of the core **(1)** enters the reflector block casing **(4)** from the space between the blocks through the openings **(5)** and the header **(5¹),** i.e. it turns 90° from the concurrent coolant flow between the blocks from bottom to the top. Then, by turning another 90° the diverted flow **(6)** flows downstream to the bottom part of the casing **(4)** through the vertical pipes **(7),** passing through the upper boundary **(H₂)** of the core **(1).** Then, the coolant flow **(6)** turns 180° and flows upstream in the casing **(4),** again passing through the lower **(H₁)** and upper **(H₂)** of the core **(1)** until it leaves the reflector block casing **(4).**

Thus, the proposed hydraulic circuit of the diverted coolant flow **(6)** in the reflector block casing **(4)** allows to increase heating of the coolant passing through the reflector block and equalization of the coolant heating temperature along the core **(1)** radius in the mixing zone: i. e. where coolant flows to have passed through fuel rods and the reflector block are mixed as a part of the coolant flow to have passed between the reflectors passes between the upper **(H₂)** and lower **(H₁)** boundaries of the core **(1)** three times and, thus, it is heated three times more by absorbing radiation in the coolant and by mans of consistent heating when releasing energy from the reflector block **(3)** steel structures. When equalizing the temperature profile along the core **(1)** radius, the medium mixing temperature of the coolant above the upper core **(1)** boundary **(H₂)** is also increased. Medium mixing temperature is the temperature reached when mixing coolant flows to have passed fuel rods of the core **(1)** and those to have passed through the reflector block **(3).** Such equalization occurs due to the increasing temperature of the coolant to have passed through the reflector block **(3).** By increasing the coolant medium mixing temperature at the upper boundary **(H₂)** of the core **(1),** the reactor plant performance is increased, i. e. power output through the secondary circuit coolant in the turbine (omitted for clarity) may be increased at the same thermal power output in the core **(1).** The enthalpy of water increases at the same flow rate of the secondary circuit. By increasing the medium mixing temperature at the core **(1)** outlet, the heat exchange surface in steam generators may be reduced at the same secondary circuit power output (omitted for clarity).

## Claims

1. A fast neutron reactor containing a core consisting of heavy liquid metal-cooled fuel rods, and neutron reflector blocks disposed around the core, which comprise a casing, ***wherein*** the said casing has at least one inlet opening in the side walls thereof, the said inlet opening being intended for diverting part of the coolant flow from the space between the blocks into the casing, at least one vertical pipe mounted in the casing, through which the diverted coolant flow, passing through the upper and lower boundaries of the core, enters the bottom part of the casing, and on the outer side of the casing, above the inlet opening, a throttling device is mounted for creating hydraulic resistance to the coolant flow in the space between the blocks.

2. A reactor according to claim 1, ***wherein*** at least one vertical pipe is connected to the casing above the upper core boundary.

3. A neutron reflector block of a fast neutron reactor comprising a casing with at least one inlet opening in the side walls thereof, the said inlet opening being intended for diverting part of the coolant flow from the space between the blocks into the casing, at least one vertical pipe mounted in the casing, through which the diverted coolant flow enters the bottom part of the casing; and, on the outer side of the casing, above the inlet opening, a throttling device is mounted for creating hydraulic resistance to the coolant flow in the space between the blocks.

4. A reflector block according to claim 3, ***wherein*** vertical pipes are connected to the casing above the upper core boundary.

5. A reflector block according to claim 3, ***wherein*** the neutron reflector block casing is made of martensite-ferrite structural steel.

6. A reflector block according to claim 3, ***wherein*** the neutron reflector block further comprises a shank.
